# EUROPEAN PATENT APPLICATION

(11) **EP 4 755 530 A2**
(43) Date of publication of application: **10.06.2026**
(21) Application number: 26174461.9
(22) Date of filing: 12.04.2023
(51) Int. Cl.: B05C 5/02

(54) **DIE COATER SYSTEM, METHOD FOR OPERATNG A DIE COATER SYSTEM, AND ELECTRODE FOR A BATTERY**

(62) Divisional of application: 23167467.2
(71) Applicant: LG Energy Solution, Ltd., Seoul 07335 (KR)
(72) Inventor: LEE, Mun Gu, 34122 Daejeon (KR); KIM, Jong Oh, 34122 Daejeon (KR)
(74) Representative: Goddar, Heinz J.

(57) **Abstract**

Die coater system configured for coating a foil with an active material, comprises a die block assembly with at least one discharge port for dispensing an active material slurry onto the foil, wherein the discharge port defines a discharge direction and extends in a lateral direction, wherein the die coater system further includes at least one adjustment device coupled to a back side of the die block assembly opposite to the discharge port, wherein the adjustment device includes an actor configured to urge at least a section of the die block assembly forwards or backwards in the discharge direction.

## Description

### TECHNICAL FIELD

The present disclosure relates to a die coater system configured for coating a foil with an active material. The invention also relates to a method for operating a die coater system for coating a foil with an active material. Furthermore, the invention relates to an electrode, particularly an anode and/or a cathode, for a battery including a foil coated with an active material.

### BACKGROUND

Batteries, in particular chargeable/dischargeable secondary batteries, are commonly used as a power source not only for mobile devices but also increasingly in electric vehicles (EV) including battery electric vehicles (BEV), hybrid electric vehicles (HEV), plug-in hybrid electric vehicles (P-HEV) and the like, in an attempt to solve air pollution and the like caused by conventional vehicles using internal combustion engines which rely on fossil fuel. Therefore, there is a growing need for development of secondary batteries and related manufacturing methods.

Currently commercialized secondary batteries include nickel cadmium batteries, nickel hydrogen batteries, nickel zinc batteries, and lithium secondary batteries. The lithium secondary batteries are considered very important for electric vehicles and have come into the spotlight because of their advantageous properties. Lithium secondary batteries for example hardly exhibit memory effects compared to nickel-based secondary batteries and can thus be charged and discharged freely while exhibiting very low self-discharge rate and high energy density.

A secondary battery may be classified based on the shape of a battery case into a cylindrical battery having an electrode assembly mounted in a cylindrical metal can, a prismatic battery having an electrode assembly mounted in a prismatic metal can, or a pouch type battery having an electrode assembly mounted in a pouch-shaped case made of a laminated aluminum sheet.

Batteries generally include two electrodes of opposite polarity, namely an anode and a cathode. The electrodes are arranged within a mutual container alongside with a separator. The separator divides the container such that the anode and the cathode do not come into immediate contact with one another so as to avoid a short circuit. Furthermore, the mutual container is filled with an electrolyte solution, which allows ions to pass from the cathode to the anode, to allow for a chemical reaction to release electrical energy. The electrodes of the battery may each comprise a respective foil. The foil may comprise or consist of an electrically conductive material. In particular, the foil may consist of or comprise a metal, or metal alloy, comprising or consisting for example of aluminum or copper. It may be preferred that at least one electrode of the battery is realized as a foil coated with an active electrode material (short: active material).

For example, an electrode configured to act as an anode may be provided with an active material layer configured for receiving and/or storing, preferably releasably storing, ions. An active material, in particular of an anode, may include graphite as its main component. An electrode configured to act as a cathode may be equipped with an active material configured to release ions. The active material, in particular for a cathode, may comprise or consist of metal oxide, such as a lithium oxide. The active material may for example include or consist of LCO (LiCoO₂), NCM (Li(NiCoMn)O₂), NCA (Li(NiCoAl)O₂), LMO (LiMn₂O) and/or LFP (LiFePO₄). The active material may further include conductive additives, binder, filler and other components in addition to the active component (active material mixture). An active cathode material may be configured to be replenishable. The process of releasing ions from the cathode active material and received of ions by the anode active material may be referred to as discharging. A process of releasing ions from an anode active material and replenishing the cathode active material with the ion may commonly be referred to as charging or recharging. The active materials used in the electrodes of a battery are considered essential for determining properties of a battery such as its capacity, voltage and memory effect.

The cathode active material may be a compound such as lithium cobalt oxide (LiCoO₂) or lithium nickel oxide (LiNiO₂) or a compound substituted with one or more transition metals; lithium manganese oxides such as Li₁₊ₓMn₂₋ₓO₄ (where x is 0 to 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni type lithium nickel oxide represented by the formula LiNi₁₋ₓMₓ O₂, where M = Co, Mn, Al, Cu, Fe, Mg, B or Ga, and x = 0.01 to 0.3; represented by the formula LiMn₂₋ₓMₓO₂ where M = Co, Ni, Fe, Cr, Zn or Ta and x = 0.01 to 0.1 or Li₂Mn₃Mo₈ where M = Fe, Co, Ni, Cu or Zn lithium manganese composite oxide; LiMn₂O₄ in which Li part of the formula is substituted with an alkaline earth metal ion.

The negative electrode active material may be, for example, include carbon such as non-graphitizable carbon or graphite-based carbon; LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, group 1 of the periodic table, metal composite oxides such as Groups 2 and 3 elements, halogens, 0<x≤1; 1≤y≤3; 1≤z≤8); lithium metal; lithium alloy; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; a Li-Co-Ni-based material or the like can be used.

A conductive material may be typically added in an amount of 1 to 30% by weight based on the total weight of the active material mixture including the electrode active material. The conductive material is not particularly limited as long as it has conductivity without causing chemical change in the battery, and examples thereof include graphite such as natural graphite or artificial graphite; carbon black such as carbon black, acetylene black, ketjen black, channel black, furnace black, lamp black, and summer black; conductive fibers such as carbon fibers and metal fibers; metal powders such as carbon fluoride, aluminum, and nickel powder; conductive compounds such as zinc oxide and potassium titanate; conductive metal oxides such as titanium oxide; alternatively or additionally, conductive materials such as polyphenylene derivatives may be used.

A binder is a component that assists in the bonding of the electrode active material and the conductive material and the bonding to the current collector, and is typically added in an amount of 1 to 30% by weight based on the total weight of the active material mixture including the electrode active material. Examples of such binders include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylener, polypropylene, ethylenepropylene-diene terpolymer (EPDM), sulfonated EPDM, styrene butyrene rubber, fluororubber, various copolymers, and the like.

A filler is optionally used as a component that suppresses expansion of the electrode, and is not particularly limited as long as it is a fibrous material without causing chemical change in the battery, and examples thereof include olefinic polymers such as polyethylene and polypropylene; Fibrous materials such as glass fibers and carbon fibers may be used.

The active material mixture may be a slurry type active material mixture in which an electrode active material or the like is included in a predetermined solvent such as NMP to properly coat the current collector (foil). Foil type current collectors used an anodes or a cathodes may generally be made of metal sheet having a thickness of 3 µm to 500 µm. An anode foil may for example include or consist of stainless steel, aluminum, nickel, titanium, fired carbon, or aluminum or stainless steel surface treated with carbon, nickel, titanium, silver, etc. A cathode foil may for example include or consist of copper, stainless steel, aluminum, nickel, titanium, calcined carbon, copper or stainless steel surface treated with carbon, nickel, titanium, silver, etc. An aluminum-cadmium alloy or the like may be used. However, it is not particularly limited as long as it has conductivity without causing chemical change to the battery. The term "foil" shall be understood as a generic term to relate to a web-type material such as a film, sheet, foil, net, porous material, such as sieve, foam, and non-woven fabric, or the like.

In order to produce an electrode for a battery by coating a foil with an active material, die coater systems are commonly used. Some die coater systems are described in KR 10-2022-0027024 A, KR 10-2022-0094459 A, KR 10-1750599 B1, KR 10 2020 037662 A, or KR 10-2020-037662 A.

It is desired to provide the foil with an active material layer of constant thickness, width and density and even height. In some circumstances, properties, particularly flow-properties of the active material slurry discharged onto the film, may not correspond to a desired value range associated with an optimal outcome. When the active material slurry discharged from the die coater system onto the foil is not within an optimal parameter range, the resulting active material layer on the foil may not have the desired thickness, width, evenness or density. In such a case, the resulting electrode might be of subpar quality, which might cause a battery to have a reduced lifespan, capacity, voltage, energy density, power level, or the like.

For example, during startup of a coating process, the temperature of the active material slurry discharged from the die block assembly may sometimes be detected to lie below an optimal temperature value range, particularly at the laterally outer sections of the discharge port. This leads to a reduced flow rate those areas and consequently to an active material layer of locally reduced thickness on the foil. At a typical rate of foil transported movement during electrode production may be 100 m/Min. In case of a startup duration of 5 minutes, roundabout 500 m of electrode of subpar quality would be manufactured.

In some instances, heating and/or cooling may be provided to control the temperature of the slurry according to a desired operating temperature. By controlling the operating temperature, flow-properties of the slurry can be affected in order to influence the rate at which the slurry is ejected from the discharge port and coated onto the foil. For example, a die coater assembly in which an active heating system is included in the die block assembly was tested. However, as the die blocks are typically massive metal blocks of a substantial mass, temperature control thereof, has proven to be rather slow and difficult to control precisely.

### DETAILED DESCRIPTION OF THE INVENTION

### TECHNICAL PROBLEM

It is an object of the invention to overcome the disadvantages of the prior art, in particular to provide a die coater system and a method for operating a die coater system as well as an electrode for providing an active material layer of improved quality, particularly regarding its thickness, width, evenness and/or density. This objective is solved by the subject matter of the independent claims.

However, the problem to be solved by the embodiments of the present disclosure is not limited to the above-described problems, and can be variously expanded within the scope of the technical idea included in the present disclosure.

### TECHNICAL SOLUTION

One or more problems known from the prior art are solved by the subject-matter according to the independent claims. Particular embodiments are given by the features of the dependent claims.

It is noted that some of the features and operations of a die coater system and method for operating a die coater device and/or foil described above may also be employed in the claimed subject-matter, and may not be repeated hereinafter, for the sake of conciseness of the description.

Accordingly, a die coater system is provided which is configured for coating a foil with an active material. The die coater system comprises a die block assembly with at least one discharge port for dispensing an active material slurry onto the foil. The discharge port may have a cross sectional area configured to face a foil. The discharge port may have a generally rectangular cross-section. It may be preferred that the die block assembly comprises at least two, at least a three, at least four or more discharge ports. The number of discharge ports of a die block assembly may be equal to two, three or four.

The discharge port extends in a lateral direction. The extension of the discharge port in the lateral direction is a preferably the main dimension of the discharge port.

The lateral extension of the discharge port refers to an extension in the first direction. The discharge port also has an extension in a second direction, which may for ease of reference be referred to as a vertical direction, wherein the second direction is crosswise from the first direction, in particular perpendicular to the first direction. The lateral extension or first extension of the discharge port is preferably larger than, in particular at least five times as large as, preferably at least 10 times as large as, more preferably at least 100 times as large as the extension of the discharge port in the second direction. The discharge port may have a slot like shape. A rectangular opening defined by the discharge port is substantially wider than it is high. The first (lateral) extension or width of the discharge port is preferably in the magnitude of at least 10 mm, in particular at least 100 mm or at least 200 mm, preferably at least 400 mm, and no more than 2000 mm, in particular no more than 1000 mm. The second (vertical) extension or height of the discharge port is preferably in the magnitude of less than 1 mm, preferably less than 100 µm, and more than 1 µm, preferably more than 10 µm.

The discharge port defines a discharge direction. The discharge direction may be designated as a third direction. The discharge direction corresponds to the direction in which the active material slurry moves through the discharge port when exiting the die block assembly. The discharge direction may correspond to a direction perpendicular to the plane defined by the first and second directions in which the cross-section of the discharge port extends. In other words, the discharge direction is preferably perpendicular to the plane in which the cross-sectional area of the discharge port is oriented.

The die block assembly may be configured to be arranged such that the foil is positioned in front of the discharge opening with a constant coating distance. The coating distance preferably extends between the discharge port and the foil in the discharge direction or third direction. The coating distance between the foil and discharge port may be configured to correspond to a desired active material layer thickness. With respect to the lateral direction, the foil may be arranged in parallel with the discharge opening. The parallel arrangement of the foil with respect to the discharge port in the lateral direction may be achieved by guiding the foil in front of the discharge port, for example over a roll of constant diameter having an axis of rotation arranged in the lateral direction.

The die coater system according to the present disclosure further includes at least one adjustment device coupled to a back side of the die block the opposite to the discharge port. In other words, the back side of the die block assembly is on the side of the die block assembly configured to face away from the foil during operation of the die coater system. In particular, the adjustment device engages the back side of the die block the opposite to the discharge port. The adjustment device may be arranged in part or completely behind the back side of the die block assembly. With respect to the discharge port, the back side of the die block assembly is arranged backwards when seen in the discharge direction. The discharge port is arranged forward of the back side with respect to the discharge direction.

In the die coater system according to the present disclosure, the adjustment device includes an actor configured to urge at least a section of the die block assembly forwards or backwards in the discharge direction. The actor may for example be configured to urge a laterally outer section of the die block assembly forwards or backwards in the discharge direction. Alternatively or additionally, the actor may be configured to urge at least a central section of the die block assembly forwards or backwards in the discharge direction. It shall be clear that the die coater system may include multiple adjustment devices with a respective actor, each. A die coater system comprising multiple adjustment devices with may include multiple actors associated with different sections of the die block assembly. In different sections of the die block assembly, for example, a first (left) outer lateral section, a second (right) outer lateral section and/or a laterally central section, may have a respective actor associated therewith. The actor is configured to selectively urge the die block assembly section associated therewith forwards and/or backwards with respect to the discharge direction. The different sections of the die coater assembly may be exposed to urging in different directions and/or of different magnitudes from separate actors. For example, a first actor may urge a first section of the die block assembly according to a first magnitude forward or backward with respect to the discharge direction, and a second actor may urge a second section of the die block assembly and a second magnitude, which may be equal to the first magnitude or different from the first magnitude, in the forward or backward in the discharge direction.

The adjustment device may be provided to the die block assembly in order to urge it forward or backward in the discharge direction so as to modify the coating distance. The adjustment device may in particular be configured to bring the die block assembly, and particularly its discharge port, at least sectionally forwards or backwards in the discharge direction and thus, closer to or further away from the foil. The adjustment device can be configured to selectively modify, particularly increase and/or decrease, a discharge distance between the die block assembly and a foil by urging the die block assembly forwards and/or backwards in the discharge direction. It may be preferred that the die coater system is configured to have an adjustment device which may selectively urge at least part of the die block assembly forwards in the discharge direction so as to decrease the coating distance. Alternatively or additionally, the die coater system may be configured to have an adjustment system capable of urging the die block assembly at least partially backwards in the discharge direction to increase the coating distance. By increasing or decreasing the discharge distance, the active material layer thickness coated onto the foil can be set. Unlike thermal adjustments of the die block assembly, forward or backward urging can be performed quickly in order to quickly adapt the die coater system in order to account for, in particular in order to compensate for, occurrences affecting the coating process to achieve an active material layer of improved quality.

In some embodiments of a die coater system the die block assembly is configured to be at least partially deformable, in particular bendable, by the adjustment device so as to at least partially displace the discharge port with respect to a resting position of the discharge port. The resting position of the discharge port may correspond to an even plane. In the resting position of the die block assembly, the discharge port preferably extends exclusively in the first (lateral) and second (height) directions, thus describing an even plane. The die block assembly may in particular be bendable with a bending curve arcing about bending centerline extending in the second direction corresponding to the transport direction of the foil and/or the height direction of the discharge opening. It may be preferred that the die block assembly is at least partially bendable to exhibit a concave or convex bending curve. A die block assembly exhibiting a convex bending curve may have at least one central section protruding beyond at least one lateral section of the die block assembly which is offset backwards with respect to the discharge direction. A die block assembly exhibiting a concave bending curve may have at least one central section retracted behind at least one lateral section of the die block assembly which is offset forwards with respect to the discharge direction. The die block assembly may be deformable to at least partially displace the discharge port by at least 1 µm, in particular at least 3 µm, more particularly at least 5 µm, and/or no more than 50 µm, in particular no more than 25 µm more particularly no more than 10 µm, with respect to the resting position of the discharge port. Surprisingly, it was shown that by deforming the die block assembly through the adjustment device to partially displace the discharge port forward or backward with respect to the discharge direction, active material layers of a significantly improved evenness end of the desired height and/or width can be manufactured. It had previously been assumed that the discharge port of a die block assembly has to always have a continuous and even plane in order to achieve an even active material layer, and that any deformation of the die block assembly must be avoided. Therefore, adaptations of the discharge port had only been contemplated with respect to its height dimension. In the embodiment of the present disclosure, on the other hand, it may be preferred that the height extension in the second direction of the discharge port remains constant. In other words, the height extension of the discharge port may preferably stay constant regardless of whether the die block assembly is in a resting position or in a position deformed through the adjustment device.

Some embodiments of the die coater system comprise at least one holding bracket attached to the back side of the die block assembly and connected to the at least one actor. In particular, the die coater system may comprise a first holding bracket and a secondary holding bracket laterally spaced from one another. The first holding bracket may be arranged in a first (left) lateral section of the die block assembly and the second holding bracket may be arranged in a second (right) lateral section of the die block assembly. It may be preferred that the first holding bracket is coupled to a first adjustment device including a first actor and that the second holding bracket is coupled to a second adjustment device including a second actor. The holding bracket may be rigidly attached to one or more die blocks of the die block assembly. For example, the holding bracket may be rigidly attached to a first (upper) as well as to a second (lower) die block. The holding bracket may be rigidly attached to multiple die blocks, such as three die blocks or four die blocks. Alternatively, the holding bracket may be rigidly attached to only one die block of the die block assembly.

According to some embodiments, the die coater system comprises at least one fixing bracket rigidly attached to the back side of the die block assembly, and a stationary base member to which the fixing bracket and the actor are rigidly attached. The stationary base member is preferably formed separately from the die block assembly. It may be preferred that the stationary base member is rigidly coupled to the die block assembly exclusively via the adjustment device(s) and fixing bracket(s). The fixing bracket may be configured to act as a stationary and/or stiff anchoring point for the die block assembly with respect to the urging action of the adjustment system, in particular deformation, such as bending, caused to the die block assembly by the at least one adjustment device. The fixing bracket may be rigidly attached to one or more die blocks of the die block assembly. For example, the fixing bracket may be rigidly attached to a first (upper) as well as to a second (lower) die block. The fixing bracket may be rigidly attached to multiple die blocks, such as three die blocks or four die blocks. Alternatively, the fixing bracket may be rigidly attached to only one die block of the die block assembly.

In a further development of the die coater system comprising the at least one fixing bracket, the at least one fixing bracket may be arranged between the first holding bracket and the second holding bracket in the lateral direction. It may be preferred that several fixing brackets are provided and that those two or more fixing brackets are arranged between the first holding bracket and the second holding bracket. For example, a first fixing bracket may be arranged adjacent to the first holding bracket, and a second fixing bracket may be arranged adjacent to a second holding bracket. An active material slurry supply pipe may be attached to the die block assembly between the fixing brackets. In particular for such die coater systems where urging, particularly deformation, of the die bracket through the adjustment devices is desired only in lateral end sections of the die block assembly, it has been shown to be advantageous to provide one or more fixing brackets therebetween to rigidify the central section of the die block assembly.

In particular, the at least one fixing bracket may be attached to the back side of the die block assembly in a lateral section of the die block assembly arranged at an outer third, in particular an outer quarter, more particularly an outer fifth, of the lateral extension of the die block assembly. Especially for such instances where modifications of the active electrode layer coated onto the foil are desired exclusively within the outermost lateral regions, advantageous effects were exhibited for such die coater systems in which also the fixing bracket or fixing brackets are arranged offset from the center quarter section or center third section of the die block assembly.

Some embodiments of the die coater system further comprise at least one transfer rod operatively coupling the at least one actor to the at least one holding bracket, and a support bracket arranged between the actor and the holding bracket supporting the transfer rod. The support bracket may be rigidly coupled to a stationary base member. The at least one transfer rod (coupling rod) may be a movable rod, such as a lever or shaft, which may preferably be movable in the third direction. Alternatively or additionally, the coupling rod may be rotatable, in particular rotatable about a shaft axis oriented in the third direction, preferably parallel to the third direction.

In a further development of the die coater system including the transfer rod, the support bracket includes means configured for selectively impairing a forward and/or backward motion of the transfer rod. The means for selectively impairing a forward and/or backward motion of the transfer rod may be configured to allow motion in case the actor is active. Alternatively or additionally, the means for selectively impairing motion of the transfer rod may be configured to inhibit motion in case the actor is inactive. In particular, the means may be configured to impair motion of the transfer rod due to pushback from active material slurry being discharged out of the die block assembly or resiliency of the die block against deformation. In particular, the transfer rod and the means configured for selectively impairing a forward and/or backward motion of the transfer rod are in a thread engagement, in particular having a trapezoidal threading.

According to some embodiments of the die coater system, the actor includes a gear unit. In particular, the gear unit of the actor may be a reduction gear unit, more particularly a self-locking reduction gear unit. The gear unit may be configured to have a reduction ratio of at least 1/10, in particular at least 1/20 or 1/50, more particularly at least 1/100. The gear unit may for example include a worm gear. Alternatively or additionally, the gear unit of the actor is configured for transforming a rotary motion of actor into a linear motion. The gear unit of the handle may be configured to transmit motion from the actor to the transfer rod, in particular to move the transfer rod at least partially with a linear motion forward or backward in the third direction. The actor may comprise an electrical drive, preferably an electromotor, such as a servomotor, a stepper motor or the like. Alternatively, the actor may comprise a manual drive, such as a crank handle.

In some embodiments, the die coater system further comprises at least one sensor unit. The die coater system may include several sensor units. The at least one sensor unit may be configured to measure the active material layer deposited on the foil. In particular, the die coater system includes an irradiation based sensor unit, such as a beta-ray transmission sensor, configured to measure the active material layer deposited on the foil. More particularly, the sensor unit is adapted to measure a thickness, density, lateral width and/or basis weight of the active material layer deposited on the foil. It may be preferred that measurements are determined with respect to a reference area, such as a 5 cm x 5 cm reference area. One or more sensor units may be configured for measuring the foil before it is coated, measuring a first (front) side of the coated foil in a wet state, measuring a first (front) side of the coated foil in a dry state, measuring a second (back) side of the coated foil in a wet state, and/or measuring a second (back) side of the coated foil in a dry state.

According to a further development of the die coater system comprising at least one sensor unit, the die coater system further comprises a control unit operatively coupled to the sensor unit and to the adjustment device, in particular to the actor, more particularly to the drive thereof. The control unit may be configured to adapt the forward and/or backward urging provided by the adjustment device based on measurements concerning the active material layer deposited on the foil. For example, a measurement concerning the active material layer deposited on the foil may be processed, for example compared to, a reference value range or a reference threshold value by the control unit, wherein the control unit may be configured to set the adjustment device in order to optimize, maintain or correct the current state of the die block assembly. By utilizing at least one sensor unit and a control unit for operating an adjustment device based on the measurement of the sensor unit, and automated optimization of the coating can be performed.

In some embodiments, the die block assembly comprises a first (upper) die block and a second (lower) die block, the first die block and the second die block surrounding a slot, wherein the discharge port communicates with the slot. The die block assembly may further comprise at least one manifold formed in the first die block and/or in the second die block. The manifold preferably communicates with the slot to provide the active material slurry to the discharge port. In particular, the manifold communicates with a supply line through which active material slurry is delivered to the die block assembly. In particular, the at least one holding bracket and/or at least one fixing bracket is rigidly attached to at least one of the first die block and/or second die block.

According to some embodiments of the die coater system, the die coater system further comprises a coating roll configured for transporting the foil in a transport direction in front of the at least one discharge port of the die block assembly. Preferably, the coating roll is configured to have an outer circumference of constant diameter distanced by a predefined discharge distance from the discharge port. The coating roll preferably has an axis of rotation extending in the lateral direction.

The present disclosure furthermore relates to a method for operating a die coater system for coating a foil with an active material using a die block assembly with at least one discharge port for dispensing an active material slurry onto the foil, wherein the discharge port extends in a lateral direction. The method furthermore comprises providing an active material slurry to the foil in a discharge direction through the discharge port of the die block assembly. The die block assembly may use several discharge ports for dispensing active material slurry. The discharge direction may correspond to the average direction of the slurry moving through the discharge port of the die block assembly. Preferably, a die block assembly including several discharge ports having the same orientation may be used. Furthermore, the method includes moving the foil in a transport direction crosswise, in particular vertical, preferably vertically upward or a vertically downward, with respect to the lateral direction of the discharge port. It may be preferred that the transport direction of the foil at the discharge port corresponds to a height direction or second direction. The lateral direction of the foil preferably corresponds to the lateral direction of the discharge port. The method furthermore comprises coupling at least one adjustment device to a back side of the die block opposite to the discharge port, and using the adjustment device to urge at least a section of the die block assembly including the discharge port forwards or backwards in the discharge direction.

The method may include controlling one or more properties of the active material slurry, such as supply pressure, supply rate, slurry temperature, etc., wherein it may be preferred that these properties are set at a constant or an essentially constant value.

It may be preferred that the method for operating a die coater system described herein uses the die coater system described herein above. The method described herein may in particular be configured for operating in accordance with the above-mentioned embodiments of the die coater system. In particular, the die coater system described herein above may be operated in accordance with the method for operating a die coater system as described herein.

In an embodiment of the method, the adjustment device is used to at least partially displace the discharge port by at least 1 µm, in particular at least 3 µm, more particularly at least 5 µm, and/or no more than 50 µm, in particular no more than 25 µm more particularly no more than 10 µm, with respect to a resting position of the discharge port, wherein preferably the resting position of the discharge port corresponds to an even plane. For example, for an average coating thickness of 0,5 mm, an increase of active material slurry by 6 mg/cm² could be achieved by urging lateral edge sections forwards in the discharge direction by at most approximately 10 µm using two laterally spaced apart adjustment devices. In another example, for an average coating thickness of 0,5 mm, a decrease of active material slurry by 8 to 10 mg/cm² could be achieved by urging lateral edge sections backwards in the discharge direction by at most approximately 5 µm using two laterally spaced apart adjustment devices. If so desired, the active material coating layer width may be modified, for example the coating width may be increased when the die block assembly is urged forwards and/or the coating width may be decreased when the die block assembly is urged backwards.

The present disclosure also relates to an electrode, in particular an anode or a cathode, or a set of anodes and/or cathodes, for a battery including a foil coated with an active material using the method described hereinabove.

### Advantageous Effects

According to the embodiments, an active material coating of significantly improved quality can be coated onto a foil for forming an electrode. The foil can be provided with an active material coating of substantially improved evenness and/or with a thickness having little to no deviation.

The effects of the present disclosure are not limited to the effects mentioned above and additional other effects not described above will be clearly understood from the description of the appended claims by those skilled in the art.

### BRIEF DESCRIPTION OF THE DRAWINGS

- FIG. 1: shows a schematic sectional view of a die coater system
- FIG. 2: is a perspective view of a die coater system according to an embodiment of the present disclosure with an opened die block assembly;
- FIG. 3: is another perspective view of the die coater system according to FIG. 2;
- FIG. 4: is a perspective view of an adjustment device according to an embodiment of the present disclosure;
- FIG. 5: is a cross-sectioned view of adjustment device according to FIG. 4;
- FIG. 6A: is a schematic top view of a die coater assembly in a resting position;
- FIG. 6B: is a schematic diagram representative of a cross sectional profile (web-gauge profile) of an active material layer deposited on a foil using the die coater assembly of Fig. 6A;
- FIG. 7A: is a schematic top view of a die block assembly bent into a convex shape;
- FIG. 7B: is a schematic diagram representative of a cross sectional profile of an active material layer deposited on a foil using the die coater assembly of Fig. 7A;
- FIG. 8A: is a schematic top view of a die block assembly bent into a concave shape; and
- FIG. 8B: is a schematic diagram representative of a cross sectional profile of an active material layer deposited on a foil using the die coater assembly of Fig. 8A.

### DETAILED DESCRIPTION OF THE EMBODIMENTS

Hereinafter, various embodiments of the present disclosure will be described in detail with reference to the accompanying drawings so that those skilled in the art can easily carry them out. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

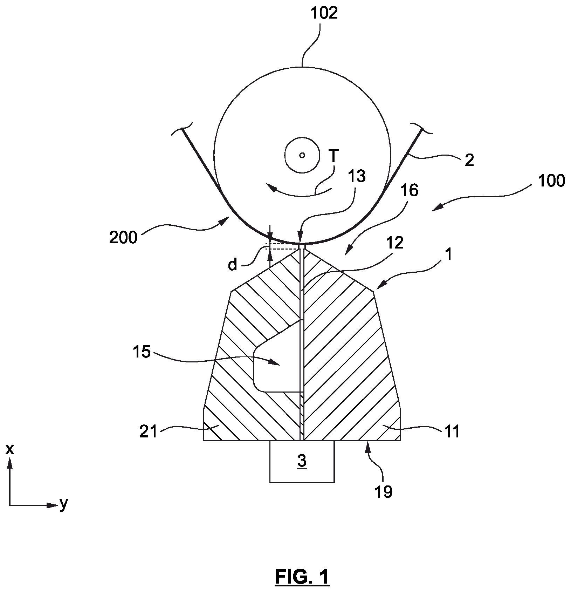

Fig. 1 shows a schematic cross sectional view of a die coater system 100. A foil 2 is guided by a roll 102 in front of the die block assembly 1. The die block assembly has a discharge port 13 facing the foil 2. The axis of rotation of the roll 102 is aligned with the discharge port 13 of the die block assembly 1. Active electrode material is coated onto the foil 2 by providing an active material slurry through the die block assembly 1 to form an active material layer 200 on a first side of the foil. The active material slurry may differ from the active material in particular in that the slurry additionally contains at least one solvent or the like. The die block assembly 1 may comprise two or more die blocks 11, 21 rigidly connected to one another. A channel may be formed as a slot 12 between the two die blocks 11, 21. For supplying active material slurry, at least one of the die blocks 21 in the assembly 1 may be provided with a manifold 15. On one side, for example the side facing the back side 19 of the die block assembly1, the manifold 15 is connected to a supply pipe. On another side, which may be referred to as a front side, the manifold 15 is connected to the channel extending to the discharge port 13 or discharge ports. The die coater system 100 of the present disclosure includes at least one adjustment device 3 coupled to the back side 19 of the die block assembly 1.

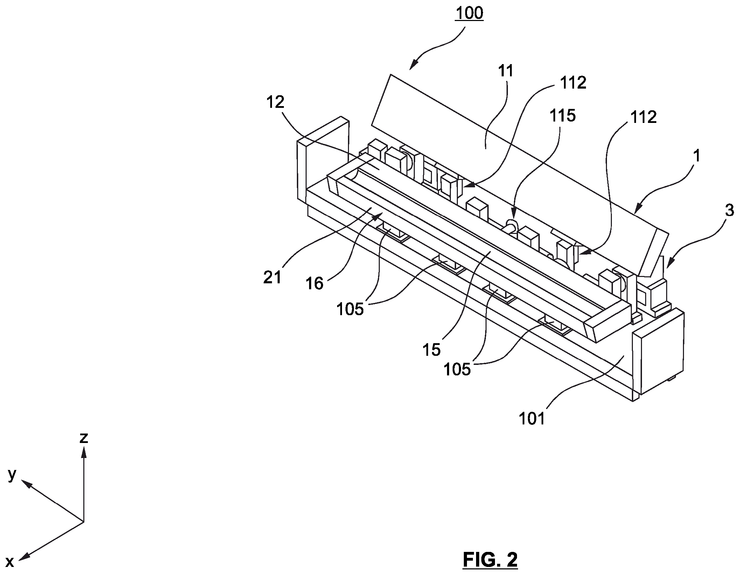

Fig. 2 shows a perspective view of a die coater system 100 according to an embodiment of the present disclosure with an opened die block assembly 1. The first die block 11 is removed from the second die block 21. The first die block 11 is tilted away from the second die block 21 with the aid of a tilting mechanism 112. The tilting mechanism 112 may be attached to the die blocks 11, 21 at back side 19 of the die block assembly 1. Alternatively, the tilting mechanism may be attached to the die blocks 11, 21 laterally (not shown in detail). The opened state or maintenance state of the die block assembly shown in Fig. 2 may for example be selected for cleaning active material slurry from the slot between the die blocks 11, 21 or from the manifold 15.

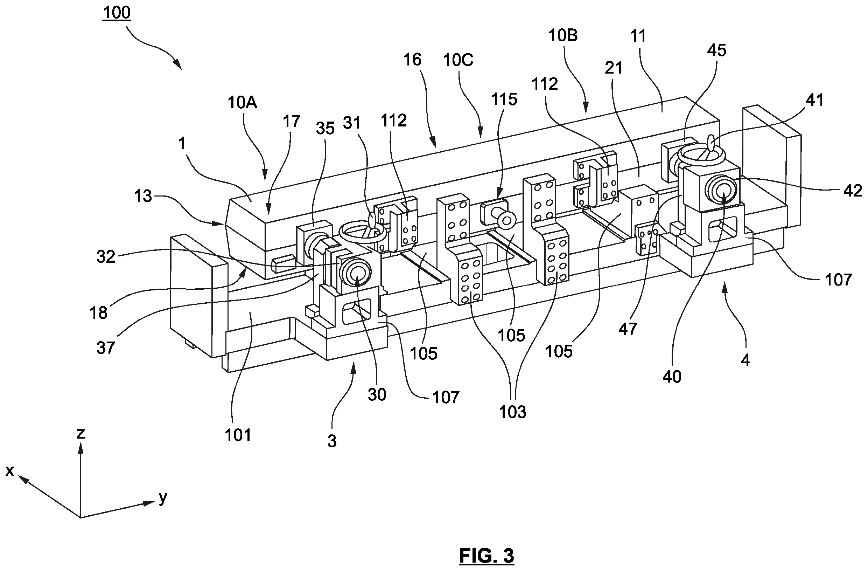

Fig. 3 shows the die coater system 100 in a closed state or operating state. In the operating state of the die coater system 100, the die blocks 11, 21 of the die block assembly 1 engage one another to define the forward facing discharge port 13. In the operating state, the die blocks 11 and 21 are rigidly fastened to one another such that the blocks essentially behave as an integral unit. In the operating state, active material slurry may be delivered to the die block assembly 1 through the supply line 115. The supply line 115 may be arranged in a laterally central section 10C of the die block assembly 1. Within the die block assembly 1, active material slurry is temporarily stored within a manifold 15. The manifold 15 may serve as a buffer storage for supplying active material slurry of uniform characteristics (for example regarding pressure, temperature, particle size) to the at least one discharge port 13.

It may be preferred that the die block assembly 1 has multiple discharge ports 13, such as two discharge ports or four discharge ports. In case the die block assembly 1 includes several discharge ports 13, it may be preferred that the several discharge ports 13 of the die block assembly 1 are of the same dimension. Preferably, in a die block assembly 1 having multiple discharge ports 13, the multiple discharge ports 13 have the same shape, first extension (width) in the first direction Y and/or a second extension (height) in the second direction Z. Multiple discharge ports 13 may be shaped with a cross section of congruent rectangular shape. A rectangular discharge port may have a first extension (width) between 200 mm and 1000 mm, in particular between 400 mm and 800 mm, preferably approximately 640 mm. A rectangular discharge port may have a second extension (height) substantially smaller than the first extension thereof. The second extension of the rectangular discharge port may be between 1 µm and 10 mm, in particular between 10 µm and 1 µm, preferably between 100 µm and 500 µm.

In the embodiment shown in Figs. 2 and 3, the die coater system 100 is configured as a horizontal die coater system 100 in which the transport direction T of the foil in front of the horizontally aligned discharge port 13 corresponds to a vertical direction Z aligned with the direction of gravity with respect to a floor of a manufacturing site. Alternatively, the die block assembly could be arranged with the discharge port 13 oriented in the vertical direction facing a foil with the transport direction in front of the discharge port 13 corresponding to a horizontal direction, in particular parallel or substantially parallel, with respect to a floor of the manufacturing site not shown.

The die block assembly 1 is mounted on a stationary base plate 101. One or more carriers or columns 105 may be arranged in the vertical direction Z between the die block assembly 1 and the stationary base plate 101 to carry the weight of the die blocks 11, 21. It may be preferred that the die blocks 11, 21 rest on top of the at least one carrier 105 in a slidable manner. Additionally, or alternatively, a linear bearing, such as a linear sliding bearing or a linear roller bearing, may be provided between the carrier 105 and the die block assembly 1. It may be preferred that the die block assembly 1 rests on top of the carriers 105 in a way which does not inhibit an adjustment of the die block assembly 1 through adjustment devices 3, 4.

Optionally, fixing brackets 103 are provided to fix the die block assembly 1 to the base plate 101. The fixing brackets 103 may be provided as a rigid connection of the die block assembly 1 the base plate 101 in the first direction X, which is aligned horizontally in the illustrated embodiments of Figs. 2 and 3. In an alternative embodiment, the at least one fixing bracket 103, multiple or all fixing brackets could be replaced with respective adjustment devices (not shown in detail). The fixing bracket 103 may be provided to define the position of a section of the die block assembly 1 associated with said fixing bracket with respect to the base plate 101. Thus, when the adjustment devices 3, 4 partially urge the die block assembly 1 away from its resting position, the one or more fixing brackets 103 may partially retain the die block assembly in its resting position. The fixing bracket 103 may be rigidly attached to one, several or all of the die blocks 11, 21 of the die block assembly 1. The fixing bracket 103 is preferably rigidly coupled to the back side 19 of the die block assembly 1. Alternatively or additionally, a rigid coupling of the fixing bracket 103 to the die block assembly 1 may be provided on the top side 17 and/or on the bottom side 18 of thereof.

As shown in Figs. 1, the die coater system 100 of the present disclosure is provided with at least one adjustment device 3, 4. The adjustment device 3, 4 is coupled to the back side 19 of the die block assembly 1. The adjustment device 3, 4 includes an actor 30, 40 configured to urge at least a section of the die block assembly forwards or backwards in the discharge direction X. As shown in Fig. 3, the die coater system 100 may be provided with several adjustment devices 3 and 4 laterally spaced from one another. The fixing brackets 103, if any, may be arranged between several adjustment devices 3, 4 in the lateral direction Y.

In the exemplary embodiment shown in Figs. 3, a first adjustment device 3 is arranged in a first, laterally outer section 10A, and a second adjustment device 4 is arranged in a second, laterally outer section 10B. This first section 10A is situated on the left side of the die block assembly 1. The second section 10B is situated on the right side of the die block assembly 1 as seen from behind in Fig. 3. A laterally outer section may be defined by the utmost third part, fourth part or fifth part of the die block assembly in the lateral direction Y.

The at least one fixing bracket 103 is arranged in a central section 10C regarding the lateral direction Y between the first section 10A and the second section 10B. In an alternative embodiment, the central section 10C may be free of any adjustment devices or fixing brackets or the like, and any fixing brackets and adjustment devices may be arranged exclusively in laterally outward sections 10A and/or 10B (not shown).

With respect to the first (lateral) direction Y and/or with respect to the second (vertical) direction Z, die coater assembly 1 may preferably be held stationarily with respect to the stationary base plate 101, in particular by the at least one adjustment device 3, the fixing bracket(s) 103 and/or the carrier(s) 105.

When the adjustment device 3 urges the die block assembly 1 forward in the discharge direction X, the section of the die block assembly 1 to which said adjustment device 3 is coupled may be moved, in particular bent, closer to the foil 2 guided in front of the discharge port 13 (in the present example by the roll 102) to narrow the gap d between the discharge port 13 and the foil 2. By urging the die block assembly forwards, the distance d between the discharge port 13 and the foil 2 is decreased in comparison to a resting position. A decreased distance d increases the flow resistance for the active material slurry such that less active material slurry can exit the discharge port 13 and be coated onto the foil 2. Consequently, the thickness t of the active material layer 200 in an area associated with the respective adjustment device 3 or 4 can be decreased.

When the adjustment device 3 urges the die block assembly 1 backward with respect to the discharge direction X, the section of the die block assembly 1 to which the adjustment device 3 is coupled may be moved, in particular bent, away from the foil 2 guided in front of the discharge port 13 to widen the distance d between the discharge port 13 and the foil 2. By urging the die block assembly backwards, the distance d between the discharge port 13 and the foil 2 is increased in comparison to a resting position. An increased distance d decreases the flow resistance for the active material slurry such that more active material slurry can exit the discharge port 13 and be coated onto the foil 2. Consequently, the thickness t of the active material layer 200 in an area associated with the respective adjustment device 3 or 4 can be increased.

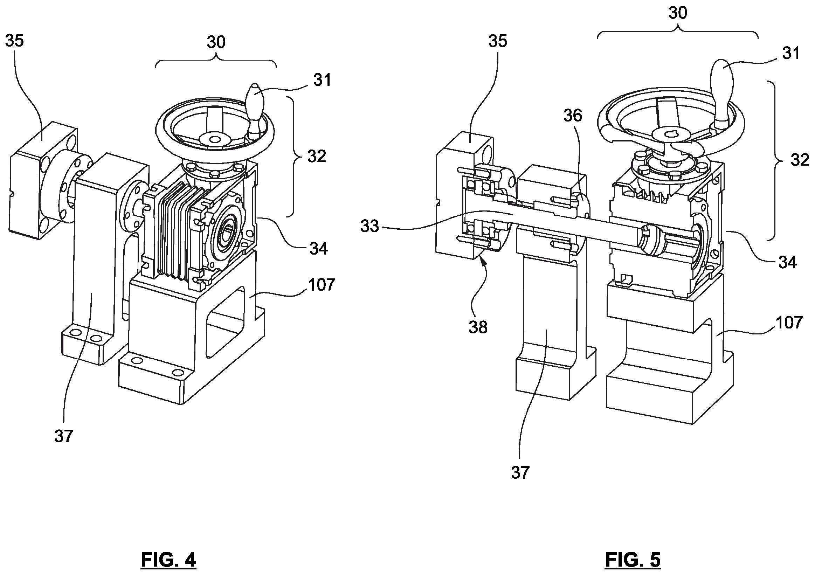

Figs. 4 and 5 show detailed illustrations of an adjustment device 3 configured for the use in a die coater system 100 according to the present disclosure. In the illustrated exemplary embodiment, a crank handle 31 realizes an actor 30 for manually driving the adjustment device 3. Alternatively, and electric drive, such as a servomotor or stepper motor could be used (not shown).

The adjustment device 3 includes a holding bracket 35 attachable to the back side 19 of the die block assembly 1. As shown in Fig. 3, the holding bracket 35, 45 may be arranged to forcibly engage the back side 19 of the die block assembly 1 and is preferably attached thereto for transferring motion and/or forces from the respective actor 30, 40 which may be directed either forward or backward in the discharge direction X. The holding bracket 35, 45 may for example be rigidly attached to a first die block 11 or a second die block 21 or multiple die blocks or all die blocks of the die block assembly 1.

The adjustment device 3 comprises a transfer rod 33 to operatively couple the actor 30 to its holding bracket 35. The transfer rod 33 is movable forwards and/or backwards in the discharge direction X. The transfer rod 33 is movable to transfer an urging force and/or motion from the actor 30 to the die block assembly 1. In the exemplary embodiment illustrated in Figs. 4 and 5, the transfer rod 33 is realized as a rotatable transfer shaft. The rotatable transfer shaft is received by a rotary bearing 38 connected to the holding bracket 35 so that the die block assembly 1 is not exposed to rotary motion of the rod 33. The rotary shaft includes a trapezoidal threading 36 received within a corresponding threading in a support bracket 37.

The support bracket 37 is fixedly connected to the stationary base plate 101 of the die coater system 100. The support bracket 37 may be provided to bear some or all of the retention forces exerted by the die block assembly 1 in the third direction X. By providing a support bracket 37 between the actor 30 and the holding bracket 35, the actor 30 may be relieved from reaction forces due to deformation of the die block assembly and/or repulsion forces due to the active material slurry leaving the die block assembly 1 through the discharge port 13. Additionally or alternatively, the provision of a trapezoidal threading 36 may provide a self locking capability such that a linear force, in particular a linear force caused by repulsion forces originating at the die block assembly 1, is hindered from causing the transfer rod 33 to move. In other words, the trapezoidal threading 36 serves as a means for selectively impairing a forward and/or backward motion of the transfer rod 33 and holding bracket 35 connected thereto unless a rotary motion is provided to the transfer rod 33 by the actor 30. The transfer rod 33 is movable forward and/or backward in the discharge direction X exclusively when the actor 30 is active. Unless the actor 30 is activated, in particular to cause a rotary motion of the transfer rod 33, the presently set state and/or position of the die block assembly 1 is maintained by the adjustment device 3.

The actor 30 of the adjustment device 3 may be provided with the gear unit 32. The gear unit 32 may have self locking capabilities, in particular to guard the actor 30 from repulsive forces originating from the die block assembly 1. Additionally or alternatively, the gear unit 32 may have a reduction ratio. The gear unit 32 may be configured to transform a first motion into a second motion. For example, the gear unit 32 may be configured to transfer a first rotary motion into a second rotary motion in a second direction. For instance, the gear unit 32 may include a worm gear. Additionally or alternatively, the gear unit 32 may be configured to transfer rotary motion into a linear motion. The gear unit may for instance 32 include a coupling to a threaded shaft transforming a rotary motion of the gear into a linear motion of the shaft, preferably the shaft acting as a transfer rod 33.

The actor 30 may be attached to the gear unit 32. The actor 30 and/or the gear unit 32 can be attached to the stationary base plate 101 with a socket member 107.

In exemplary the embodiment of a die coater system 100 shown in Figs. 2 and 3, two adjustment devices 3 and 4 of equal configuration are provided. The first adjustment device 3 and the second adjustment device 4 may be configured as described above with respect to Figs. 4 and 5. In a die coater system 100 according to the present disclosure, multiple adjustment devices 3, 4 can be operated independently of one another in order to provide individual forward or backward urging in the respective sections of the die block assembly 1 associated with one respective the multiple adjustment devices 3, 4. Optionally, the die coater system 100 may be configured, in particular in a synchronized mode of operation, to operate multiple adjustment devices 3 and 4 correspondingly to one another in order to provide the same forward or backward urging in the respective sections of the dichroic assembly 1 associated with a respective adjustment device 3 or 4.

When an actor 30, 40 or an adjustment device 3, 4 is activated, the respective holding bracket 35, 45 thereof is caused to urge the associated section of the die block assembly 1 forward or backward in the discharge direction X.

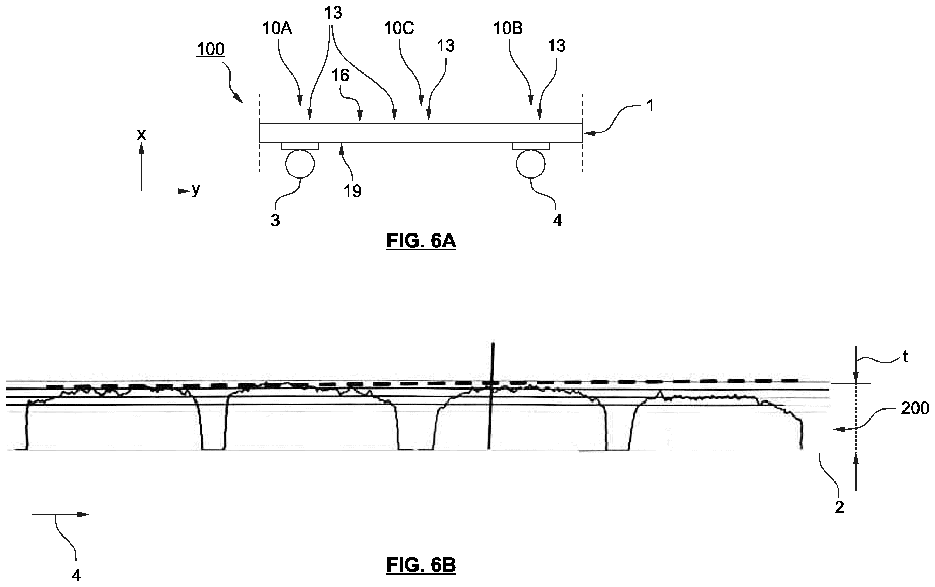

Figs. 6a, 7a and 8a illustrate a schematic die coater system 100, which may be configured as described above, in different states. The die coater system 100 comprises two laterally spaced adjustment devices 3, 4 coupled to the back side 19 of a die block assembly 1 which has four laterally spaced discharge ports 13 of substantially equal dimension.

In Fig. 6A, the die block assembly 1 is in a resting state. In the resting state of the die block assembly 1, the discharge ports 13 are situated in an even plane extending in the first (lateral) direction Y and the second (vertical) direction Z. Figure 6B shows a schematic diagram representative of a cross sectional profile (web-gauge profile) of an active material layer deposited on a foil using the die coater assembly of Fig. 6a. When the active material slurry has homogeneous material properties (in particular pressure, temperature, density) which substantially do not differ regardless through which one of the multiple discharge ports 13 active material slurry is discharged, the resulting active material layer 200 coated onto a foil 2 as indicated in Fig. 6B shows substantially even and constant characteristics. The layer 200 is coated onto the foil 2 in four distinct lines corresponding to the four discharge ports 13. The four lines are of substantially equal width, density and height. The thickness t of the layer 200 is substantially constant thus even in the lateral direction Y.

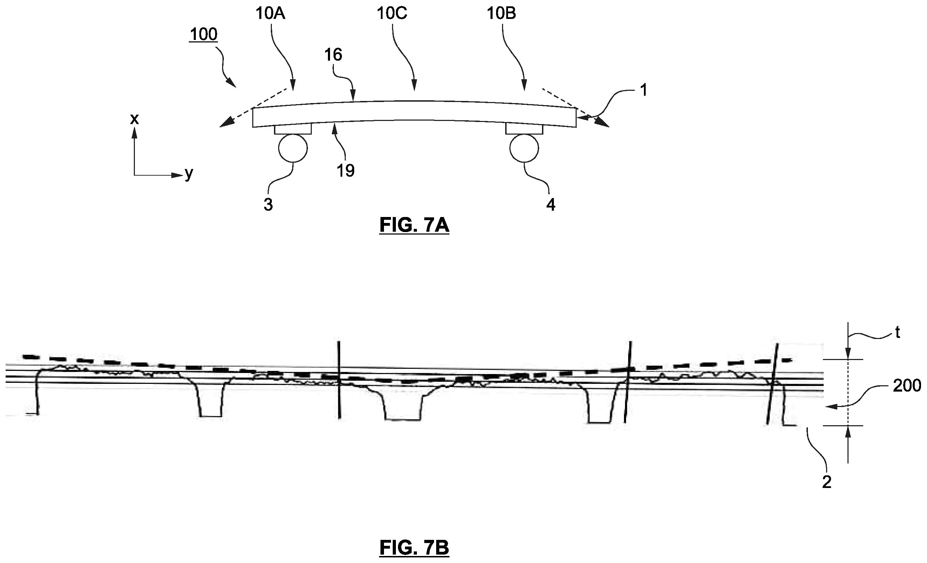

In Fig. 7A, the die block assembly is urged into a first deformed state, namely bent into a convex shape as seen from above in the vertical direction Z. In the first deformed state, the adjustment devices 3, 4 are operated to urge the associated laterally outer sections 10A, 10B of the die block assembly 1 backwards with respect to the discharge direction X. The urging of the adjustment devices 3, 4 causes the die block assembly to deviate from the rectilinear resting state and display a convexly bent geometry as seen from above with respect to the vertical direction Z. The outer sections 10A, 10B are removed further away from the foil 2 than the laterally central section 10C of the die block assembly. The discharge ports 13 of the die block assembly 1 are bent in a corresponding manner. Thus, the further outward a discharge ports 13 is arranged with respect to the lateral direction Y, the further it is distanced from the foil 2. As can be seen in Fig. 7B, the cross-section of the active material layer 200 deposited onto the foil 2 with a die block assembly 1 urged into a first state shows a larger thickness t in the laterally outward lines and areas in comparison to the more relatively central lines and areas.

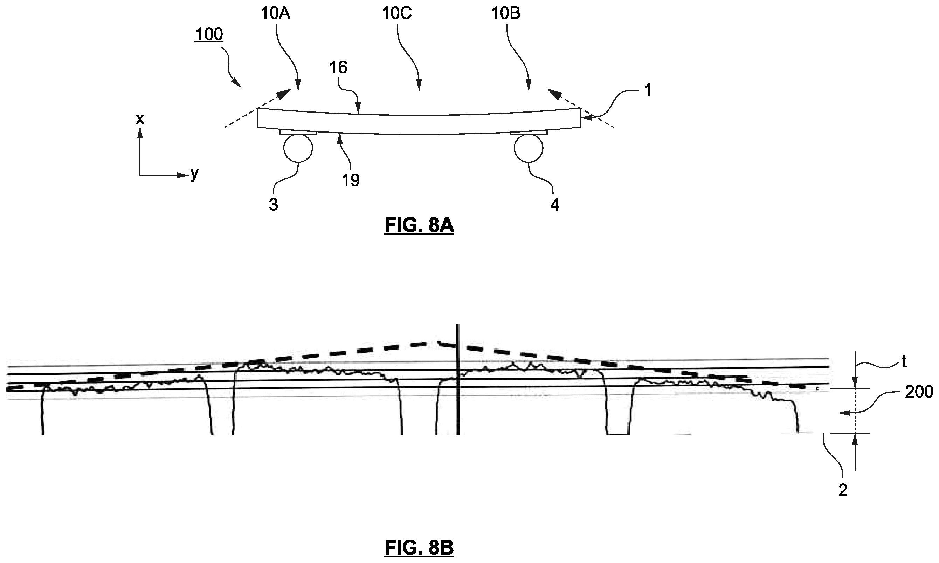

In Fig. 8A, the die block assembly is urged into a second deformed state, namely bent into a concave shape as seen from above in the vertical direction. In the second deformed state, the adjustment devices 3, 4 are operated to urge the associated laterally outer sections 10A, 10B of the die block assembly 1 forward with respect to the discharge direction X. The urging of the adjustment devices 3, 4 causes the die block assembly to deviate from the rectilinear resting state and display a concavely bent geometry as seen from above with respect to the vertical direction Z. The outer sections 10A, 10B are moved closer to the foil 2 than the laterally central section 10C of the die block assembly. The discharge ports 13 of the die block assembly 1 are bent in a corresponding manner. Thus, the further outward a discharge ports 13 is arranged with respect to the lateral direction Y, the closer it is situated to the foil 2. As can be seen in Fig. 8B, the cross-section of the active material layer 200 deposited onto the foil 2 with a die block assembly 1 urged into a second state shows a relatively smaller thickness t in the laterally outward lines and areas in comparison to the more central lines and areas.

Several experiments were conducted to measure the effect of using a die coater system 1 according to the present disclosure in different operating states. In the experiments described below, the temperature of the active material slurry and other characteristics regarding the active material slurry are controlled to be constant. The surrounding is preferably set to standard conditions (25°C, 1013.25 hectopascal). Experiments were conducted by measuring loading profiles (g/cm²), in particular as a base weight, of active material layers 200 coated onto foil 2 using beta ray transmission sensors (not shown). In the different experiments, adjustment devices were set to different offset values so as to urge associated sections of the die block assembly forwards in the discharge direction (indicated as -), in the manner as explained above with respect to Fig. 7A, or backward in the discharge direction (indicated as +), in the manner as explained above with respect to Fig. 8A. For each respective sample, properties of four laterally spaced lines of active material coating layers were considered. For each of the pair of left lines (DS) and right lines (OS), an average value (AVG) in the maximum value (MAX) regarding the loading profiles was determined. additionally, for the two central lines, the respective width (a, b), center distance (c) between the two central lines, and lateral distance (d, e) to the respective adjacent outer line was determined. the results of the experiments can be inferred from table 1 shown below.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

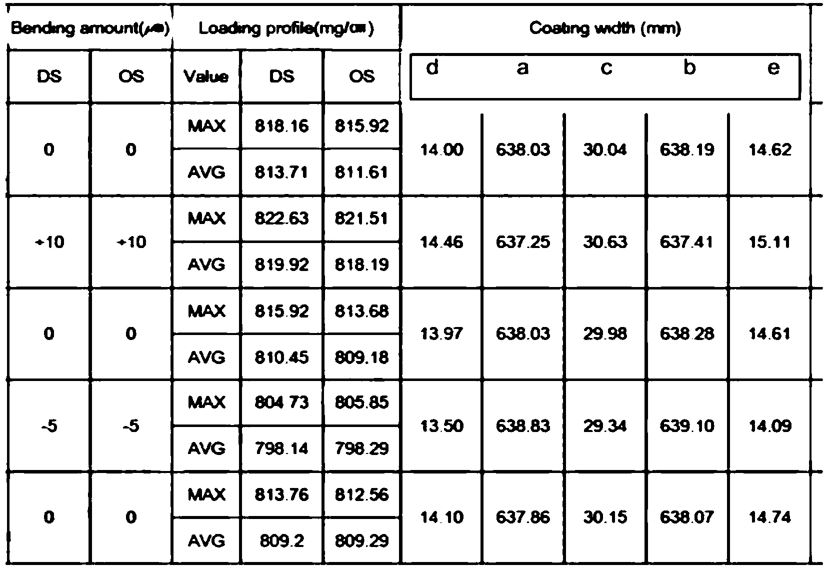

In view of the foregoing disclosure, the present invention may be implemented in accordance with the following itemized embodiment examples.
Item 1. Die coater system configured for coating a foil with an active material, comprising:
   a die block assembly with at least one discharge port for dispensing an active material slurry onto the foil, wherein the discharge port defines a discharge direction and extends in a lateral direction,
   wherein the die coater system further includes at least one adjustment device coupled to a back side of the die block assembly opposite to the discharge port, wherein the adjustment device includes an actor configured to urge at least a section of the die block assembly forwards or backwards in the discharge direction.
Item 2. The die coater system of item 1, wherein:
   the die block assembly is configured to be at least partially deformable, in particular bendable, by the adjustment device, so as to at least partially displace the discharge port by at least 1 µm, in particular at least 3 µm, more particularly at least 5 µm, and/or no more than 50 µm, in particular no more than 25 µm more particularly no more than 10 µm, with respect to a resting position of the discharge port, wherein preferably the resting position of the discharge port corresponds to an even plane.
Item 3. The die coater system of one of the preceding items, comprising
   at least one holding bracket attached to the back side of the die block assembly and connected to the at least one actor, in particular a first holding bracket and a second holding bracket laterally spaced from one another.
Item 4. The die coater system of one of the preceding items, comprising
   at least one fixing bracket attached to the back side of the die block assembly, and
   a stationary base member to which the fixing bracket and the actor is rigidly attached.
Item 5. The die coater system of item 3 and 4, wherein
   the at least one fixing bracket is arranged between the first holding bracket and the second holding bracket in the lateral.
Item 6. The die coater system of item 5, wherein
   the at least one fixing bracket is attached to the back side of the die block assembly in a lateral section of the die block assembly arranged at an outer third, in particular an outer quarter, more particularly an outer fifth, of the lateral extension of the die block assembly.
Item 7. The die coater system of one of the items 3 to 6, further comprising:
   at least one transfer rod operatively coupling the at least one actor to the at least one holding bracket, and a support bracket arranged between the actor and the holding bracket supporting the transfer rod.
Item 8. The die coater system of item 7, wherein
   the support bracket includes means configured for selectively impairing a forward and/or backward motion of the transfer rod.
Item 9. The die coater system of item 8, wherein
   the transfer rod and the means configured for selectively impairing a forward and/or backward motion of the transfer rod are in a thread engagement, in particular having a trapezoidal threading.
Item 10. The die coater system of one of the preceding items, wherein
   the actor includes a gear unit,
   in particular a reduction gear unit, more particularly a self-locking reduction gear unit, and/or
   in particular configured for transforming a rotary motion of an actor into a linear motion.
Item 11. The die coater system of one of the preceding items, further comprising
   at least one sensor unit, in particular an irradiation based sensor unit, such as a beta-ray transmission sensor, configured to measure the active material layer deposited on the foil.
Item 12. The die coater system of one of the preceding items, further comprising comprising a control unit operatively coupled to the sensor unit and to the adjustment device and configured to adapt the forward and/or backward urging based on measurements concerning the active material layer deposited on the foil.
Item 13. The die coater system of one of the preceding items, wherein
   the die block assembly comprises a first die block and a second die block, the first die block and the second die block surrounding a slot, wherein the discharge port communicates with the slot, and at least one manifold formed in the first die block and/or in the second die block, wherein in particular the at least one holding bracket and/or at least one fixing bracket is rigidly attached to at least one of the first die block and the second die block.
Item 14. The die coater system of one of the preceding items, further comprising
   a coating roll configured for transporting the foil in a transport direction in front of the at least one discharge port, wherein the coating roll is arranged in front of the at least one discharge port and has an axis of rotation extending in the lateral direction.
Item 15. A method for operating a die coater system for coating a foil with an active material using a die block assembly with at least one discharge port for dispensing an active material slurry onto the foil, wherein the discharge port extends in a lateral direction,
   providing an active material slurry to the foil in a discharge direction through the discharge port of the die block assembly
   moving the foil in a transport direction crosswise with respect to the lateral direction of the discharge port,
   coupling at least one adjustment device to a back side of the die block opposite to the discharge port, and using the adjustment device to urge at least a section of the die block assembly including the discharge port forwards or backwards in the discharge direction.
Item 16. The method according to item 15, wherein
   the adjustment device is used to at least partially displace the discharge port by at least 1 µm, in particular at least 3 µm, more particularly at least 5 µm, and/or no more than 50 µm, in particular no more than 25 µm more particularly no more than 10 µm, with respect to a resting position of the discharge port, wherein preferably the resting position of the discharge port corresponds to an even plane.
Item 17. An electrode for a battery including a foil coated with an active material by the method according to item 15 or 16.

### DESCRIPTION OF REFERENCE NUMERALS

- 1: die block assembly
- 2: foil
- 3, 4: adjustment device
- 10A: first lateral section
- 10B: second lateral section
- 10C: laterally central section
- 11: first die block
- 12: slot
- 13: discharge port
- 15: manifold
- 16: front side
- 17: top side
- 18: bottom side
- 19: back side
- 21: second die block
- 30, 40: actor
- 31, 41: crank handle
- 32, 42: gear unit
- 33, 43: transfer rod
- 34, 44: worm gear
- 35, 45: holding bracket
- 36: trapezoidal threading
- 37, 47: support bracket
- 100: die coater system
- 101: stationary base member
- 102: roll
- 103, 104: fixing bracket
- 105: carrier
- 107: socket
- 112: tiling device
- 115: supply pipe
- 200: active material layer
- T: transport direction
- X: third direction, discharge direction
- Y: first direction, lateral direction
- Z: second direction

## Claims

1. Die coater system (100) configured for coating a foil (2) with an active material, comprising
a die block assembly (1) with at least one discharge port (13) for dispensing an active material slurry onto the foil (2), wherein the discharge port (13) defines a discharge direction and extends in a lateral direction,
wherein the die coater system (100) further includes multiple adjustment device (3, 4) coupled to a back side (19) of the die block assembly (1) opposite to the discharge port (13), wherein the multiple adjustment devices (3, 4) include a respective actor (30, 40) associated with different sections of the die block assembly (1), wherein each actor (30, 40) is configured to selectively urge the die block assembly section associated therewith forwards or backwards in the discharge direction,
further comprising
a first holding bracket (35) and a second holding bracket (45) are laterally spaced from one another, the first holding bracket (35) and the second holding bracket (45) being attached to the back side (19) of the die block assembly (1) and connected to a respective actor (30, 40),
at least one fixing bracket (103, 104) attached to the back side (19) of the die block assembly (1), wherein the at least one fixing bracket (103, 104) is arranged between the first holding bracket (35) and the second holding bracket (45) in the lateral direction; and further comprising
a stationary base member (101) to which the fixing bracket (103, 104) and the actor (30, 40) are rigidly attached.

2. The die coater system (100) of claim 1, wherein:
the die block assembly (1) is configured to be at least partially deformable, in particular bendable, by the adjustment device (3, 4), so as to at least partially displace the discharge port (13) by at least 1 µm, in particular at least 3 µm, more particularly at least 5 µm, and/or no more than 50 µm, in particular no more than 25 µm more particularly no more than 10 µm, with respect to a resting position of the discharge port (13), wherein preferably the resting position of the discharge port (13) corresponds to an even plane.

3. The die coater system (100) of one of the preceding claims, wherein
the at least one fixing bracket (103, 104) is attached to the back side (19) of the die block assembly (1) in a lateral section (10A, 10B, 10C) of the die block assembly (1) arranged at an outer third, in particular an outer quarter, more particularly an outer fifth, of the lateral extension of the die block assembly (1).

4. The die coater system (100) of one of the preceding claims, further comprising:
at least one transfer rod (33, 43) operatively coupling the at least one actor (30, 40) to the at least one holding bracket (35, 45), and a support bracket (37, 47) arranged between the actor (30, 40) and the holding bracket (35, 45) supporting the transfer rod (33, 43).

5. The die coater system (100) of claim 4, wherein
the support bracket (37, 47) includes means configured for selectively impairing a forward and/or backward motion of the transfer rod (33, 43).

6. The die coater system (100) of claim 5, wherein
the transfer rod (33, 43) and the means configured for selectively impairing a forward and/or backward motion of the transfer rod (33, 43) are in a thread engagement, in particular having a trapezoidal threading (36).

7. The die coater system (100) of one of the preceding claims, wherein
the actor (30, 40) includes a gear unit (32, 42),
in particular a reduction gear unit, more particularly a self-locking reduction gear unit, and/or
in particular configured for transforming a rotary motion of an actor (30, 40) into a linear motion.

8. The die coater system (100) of one of the preceding claims, further comprising
at least one sensor unit, in particular an irradiation based sensor unit, such as a beta-ray transmission sensor, configured to measure the active material layer (200) deposited on the foil (2).

9. The die coater system (100) of one of the preceding claims, further comprising
comprising a control unit operatively coupled to the sensor unit and to the adjustment device (3, 4) and configured to adapt the forward and/or backward urging based on measurements concerning the active material layer (200) deposited on the foil (2).

10. The die coater system (100) of one of the preceding claims, wherein
the die block assembly (1) comprises a first die block (11) and a second die block (21), the first die block (11) and the second die block (21) surrounding a slot (12), wherein the discharge port (13) communicates with the slot (12), and at least one manifold (15) formed in the first die block (11) and/or in the second die block (21), wherein in particular the at least one holding bracket (35, 45) and/or at least one fixing bracket (103, 104) is rigidly attached to at least one of the first die block (11) and the second die block (21).

11. The die coater system (100) of one of the preceding claims, further comprising
a coating roll (102) configured for transporting the foil (2) in a transport direction in front of the at least one discharge port (13), wherein the coating roll (102) is arranged in front of the at least one discharge port (13) and has an axis of rotation extending in the lateral direction.

12. A method for operating a die coater system (100) for coating a foil (2) with an active material
using a die block assembly (1) with at least one discharge port (13) for dispensing an active material slurry onto the foil (2), wherein the discharge port (13) extends in a lateral direction,
providing an active material slurry to the foil (2) in a discharge direction through the discharge port (13) of the die block assembly (1)
moving the foil (2) in a transport direction crosswise with respect to the lateral direction of the discharge port (13),
coupling at least one adjustment device (3, 4) to a back side (19) of the die block opposite to the discharge port (13), and using the adjustment device (3, 4) to urge at least a section of the die block assembly (1) including the discharge port (13) forwards or backwards in the discharge direction.

13. The method according to claim 12, wherein
the adjustment device (3, 4) is used to at least partially displace the discharge port (13) by at least 1 µm, in particular at least 3 µm, more particularly at least 5 µm, and/or no more than 50 µm, in particular no more than 25 µm more particularly no more than 10 µm, with respect to a resting position of the discharge port (13), wherein preferably the resting position of the discharge port (13) corresponds to an even plane.
